Europäisches Patentamt

European Patent Office

Office européen des brevets

(19)

(11) **EP 0 818 668 B1**

(12) **FASCICULE DE BREVET EUROPEEN**

(45) Date de publication et mention
de la délivrance du brevet:
**22.08.2001 Bulletin 2001/34**

(51) Int Cl.⁷: **G01B 11/30**

(21) Numéro de dépôt: **97401473.0**

(22) Date de dépôt: **25.06.1997**

(54) **Dispositif pour déterminer la forme de la surface d'onde réfléchie par une pièce sensiblement plane**

Vorrichtung zum Bestimmen der Oberflächenform einer Welle, die von einem im wesentlichen flachen Gegenstand reflektiert wird

Device for determining the surface shape of a wave reflected by a substantially flat object

(84) Etats contractants désignés:
**CH DE ES GB IT LI**
Etats d'extension désignés:
**SI**

(30) Priorité: **10.07.1996 FR 9608599**

(43) Date de publication de la demande:
**14.01.1998 Bulletin 1998/03**

(73) Titulaires:
• **COMPAGNIE INDUSTRIELLE DES LASERS CILAS**
**F-91460 Marcoussis (FR)**
• **COMMISSARIAT A L'ENERGIE ATOMIQUE**
**75015 Paris Cédex 15 (FR)**

(72) Inventeur: **Bray, Michael**
**45160 Olivet (FR)**

(74) Mandataire: **Bonnetat, Christian**
**CABINET BONNETAT**
**29, rue de St. Pétersbourg**
**75008 Paris (FR)**

(56) Documents cités:
**DE-A- 4 218 382**     **US-A- 4 792 228**
**US-A- 5 343 410**     **US-A- 5 473 435**

## Description

La présente invention concerne un dispositif pour déterminer la forme de la surface d'onde réfléchie par une pièce sensiblement plane.

Plus précisément, on cherche à mesurer la hauteur "d'aspérités" et/ou de "dépressions" infimes, par exemple de l'ordre du nanomètre et plus pour des périodes plus grandes que 0,1 mm environ, sur toute ladite surface sensiblement plane.

Pour ce faire, on utilise le principe connu de mesures interférométriques. Selon ce principe, on réalise des interférences lumineuses par les réflexions d'un faisceau lumineux de mesure, émis par un interféromètre, respectivement sur la surface de la pièce à mesurer et sur une surface parallèle ou sensiblement parallèle d'une lame de référence. Les interférences ainsi créées se manifestent sous forme de franges d'interférence, susceptibles d'être mesurées par l'interféromètre et représentatives de la distance entre les deux surfaces, aux points considérés.

Aussi, pour pouvoir déterminer précisément la forme de la surface d'onde réfléchie par la pièce, à partir de telles distances, il est nécessaire que la planéité de la lame de référence soit de l'ordre de grandeur de la pièce à mesurer et que la taille de ladite lame de référence soit au moins égale à celle de ladite surface de la pièce. De plus, le faisceau de mesure doit également présenter un diamètre de taille au moins équivalente.

Les contraintes physiques précitées ne présentent pas trop de difficultés, notamment techniques, tant que la surface de la pièce à mesurer est de dimension réduite.

Toutefois, dès que la surface de la pièce dépasse une ou quelques centaines de millimètres, l'outillage nécessaire à la mesure devient lourd, encombrant, coûteux et difficile à mettre en oeuvre. Ainsi, par exemple pour mesurer une surface de 600 mm de diagonale, on doit utiliser un agrandisseur du faisceau de mesure issu de l'interféromètre de plusieurs mètres de longueur.

Aussi, pour remédier à ces inconvénients, une solution connue et décrite notamment dans un article de Cochran et Creath paru dans la revue "Applied Optics" le 15 mai 1988 sous le titre "Combining multiple-subaperture and two-wavelength techniques to extend the measurement limits of an optical surface profiler", préconise d'utiliser un interféromètre usuel dont le diamètre du faisceau de mesure est réduit et de réaliser des mesures sur une pluralité de zones de mesure recouvrant complètement ladite surface, chacune desdites zones de mesure étant au moins partiellement recouverte sur un secteur de recouvrement par une zone de mesure adjacente.

Les mesures sur lesdits secteurs de recouvrement sont utilisées pour adapter entre elles les mesures réalisées sur les différentes zones de mesure adjacentes, ce qui permet d'assembler ensemble les images desdites zones de mesure de manière à obtenir une image relative à toute la surface de la pièce, indiquant la forme de la surface d'onde réfléchie.

De façon connue, un dispositif pour mesurer la forme de la surface d'onde réfléchie par une pièce sensiblement plane, par la mise en oeuvre de la solution connue précitée, utilisant la mesure de zones de mesure se recouvrant partiellement, comporte de façon usuelle et tel que décrit par exemple dans le brevet US-5 343 410 :

- un support portant la pièce à mesurer ;
- un interféromètre agencé en regard de la surface de réflexion de la pièce, susceptible d'émettre un faisceau lumineux de mesure sur une zone de mesure de ladite surface et de mesurer les franges d'interférence créées par les réflexions dudit faisceau de mesure, respectivement sur ladite surface et sur une lame de référence agencée sensiblement parallèlement à ladite surface sur le trajet dudit faisceau de mesure ;
- des moyens de déplacement susceptibles de déplacer, d'une part, ledit support dans une première direction du plan de la pièce et, d'autre part, ledit interféromètre dans une seconde direction du plan de la pièce, orthogonale à ladite première direction de manière à engendrer le balayage dudit faisceau de mesure sur la surface de la pièce afin de permettre audit interféromètre de réaliser des mesures sur une pluralité de zones de mesure recouvrant complètement ladite surface, chacune desdites zones de mesure étant au moins partiellement recouverte sur un secteur de recouvrement par une zone de mesure adjacente ; et
- une unité de commande commandant ledit interféromètre et lesdits moyens de déplacement et déterminant, à partir des mesures effectuées par l'interféromètre sur toutes lesdites zones de mesure, et selon le principe connu précité, la forme de ladite surface d'onde réfléchie par la pièce.

Le dispositif connu décrit ci-dessus ne permet pas de réaliser les mesures automatiquement.

En effet, ce dispositif, qui est surtout destiné à mesurer des pièces de grandes dimensions comme indiqué précédemment, nécessite un support robuste et de dimension adaptée. Il est alors techniquement impossible d'obtenir et de maintenir un parallélisme précis sur toute la surface, à quelques micromètres près, entre la lame de référence et la surface à mesurer de la pièce qui est portée par ce support, en raison notamment de l'existence de flexions et/ou de jeux au niveau du support, ainsi qu'au niveau de la fixation de la pièce sur le support.

Cet inconvénient rend nécessaire de régler manuellement, avant chaque mesure d'une zone de mesure, le parallélisme entre la lame de référence et la surface de la pièce, entraînant ainsi une mise en oeuvre longue et difficile.

De plus, le dispositif connu précité ne permet pas de réaliser des mesures par transmission, comme cela est nécessaire pour certaines pièces transparentes devant être mesurées.

DE-A-42 18 382 décrit un dispositif pour mesurer ponctuellement la rugosité de la surface d'une pièce à l'aide d'un interféromètre du type hétérodyne. Si, à cause de la rugosité de la surface, le point de mesure a une surface inclinée par rapport à la surface générale de la pièce, les ondes optiques du faisceau de mesure focalisées et réfléchies de ce point ne peuvent plus rentrer par l'ouverture de l'interféromètre. Pour remédier à cet inconvénient, un rayon laser est utilisé pour mesurer l'inclinaison de la surface du point de mesure pour que la position du faisceau de mesure, qui est focalisé sur le point de mesure, puisse être ajustée par rapport à l'ouverture de l'interféromètre. Ce rayon laser est détecté par un capteur qui commande la position du faisceau de mesure.

La présente invention a pour objet de remédier à ces inconvénients. Elle concerne un dispositif permettant de déterminer, de façon rapide et précise, la forme de la surface d'onde réfléchie par une pièce, à partir de mesures interférométriques susceptibles d'être réalisées automatiquement, ceci quelle que soit la taille de ladite pièce.

A cet effet, selon l'invention, ledit dispositif qui comporte :

- un interféromètre agencé en regard de la surface de réflexion de la pièce, susceptible d'émettre un faisceau lumineux de mesure sur une zone de mesure de ladite surface et de mesurer les franges d'interférence créées par les réflexions dudit faisceau de mesure, respectivement sur ladite surface et sur une lame de référence agencée sensiblement parallèlement à ladite surface sur le trajet dudit faisceau de mesure ;
- des moyens de déplacement permettant d'engendrer par leur action le balayage dudit faisceau de mesure sur la surface de la pièce de manière à permettre audit interféromètre de réaliser des mesures sur une pluralité de zones de mesure recouvrant complètement ladite surface, chacune desdites zones de mesure étant au moins partiellement recouverte sur un secteur de recouvrement par une zone de mesure adjacente ; et
- une unité de commande commandant ledit interféromètre et lesdits moyens de déplacement et déterminant, à partir des mesures effectuées par l'interféromètre sur toutes les zones de mesure, la forme de ladite surface d'onde réfléchie par la pièce, les mesures effectuées sur les secteurs de recouvrement étant utilisées pour adapter entre elles les mesures réalisées sur les zones de mesure adjacentes correspondantes,

est remarquable en ce qu'il comporte de plus :

- un premier miroir orientable et agencé sur le trajet du faisceau de mesure entre l'interféromètre et la pièce de manière à adresser, par réflexion, ledit faisceau de mesure orthogonalement sur la surface de ladite pièce ; et
- un capteur optique susceptible de déterminer la position de l'image d'un point lumineux du faisceau de mesure, réfléchi par la surface de la pièce, ledit point lumineux étant situé à une position de référence prédéfinie, et l'orientation dudit premier miroir étant commandée de manière à ramener automatiquement la position de l'image du point lumineux, déterminée par le capteur optique, à ladite position de référence.

Ainsi, grâce à la commande automatique dudit premier miroir, on règle en temps utile de façon précise le parallélisme nécessaire à la mesure, ce qui évite d'avoir à régler ce parallélisme avant chaque mesure d'une zone de mesure.

Par conséquent, la détermination de la forme de la surface d'onde réfléchie par la pièce peut être mise en oeuvre de façon rapide et précise.

De façon avantageuse, l'orientation dudit premier miroir est commandée par l'unité de commande recevant les mesures effectuées par ledit capteur optique, par exemple une caméra de type CCD.

De plus, de préférence, ledit capteur optique est intégré dans l'interféromètre.

En outre, pour optimiser les traitements, on peut affiner, avant chaque mesure d'une zone de mesure, l'orientation dudit premier miroir à partir du traitement de franges d'interférence mesurées par l'interféromètre.

Dans un mode de réalisation particulièrement avantageux de l'invention, le dispositif conforme à l'invention est réalisé de manière à pouvoir également déterminer la forme de la surface d'onde transmise par une pièce transparente. A cet effet, selon l'invention, le support est réalisé, au moins sur la partie portant ladite pièce, de manière à laisser passer le faisceau lumineux de mesure émis par l'interféromètre et transmis par ladite pièce qui est transparente, et ledit dispositif conforme à l'invention comporte de plus un second miroir orientable, qui est agencé du côté opposé à l'interféromètre par rapport au support et à la pièce et qui est disposé sur le trajet du faisceau de mesure émis par l'interféromètre et transmis selon une direction de transmission par la pièce et le support, ledit second miroir étant agencé approximativement orthogonalement audit faisceau de mesure transmis et étant orienté de manière à renvoyer ledit faisceau de mesure dans ladite direction de transmission.

Le dispositif conforme à ce dernier mode de réalisation permet donc à la fois des mesures en réflexion et des mesures en transmission.

Bien entendu, ledit second miroir peut être orienté manuellement. Toutefois, de préférence, l'orientation dudit second miroir est commandée automatiquement par ladite unité de commande.

Par ailleurs, de façon avantageuse, le dispositif conforme à l'invention comporte une plaquette amovible, de dimensions au moins égales aux courses du support, montée sur le support et munie d'une pluralité d'éléments caractéristiques, par exemple des trous, dont les positions effectives sont connues et sont susceptibles d'être mesurées par l'interféromètre, les comparaisons respectivement entre les positions mesurées par l'interféromètre et les positions effectives connues de ces éléments caractéristiques permettant de déterminer la position relative entre le support et le faisceau de mesure émis sur la pièce.

Les figures du dessin annexé feront bien comprendre comment l'invention peut être réalisée. Sur ces figures, des références identiques désignent des éléments semblables.

La figure 1 montre de façon schématique un dispositif pour déterminer la forme de la surface d'onde réfléchie par une pièce, à partir de mesures interférométriques.

La figure 2 illustre schématiquement les caractéristiques essentielles du dispositif conforme à l'invention.

La figure 3 montre schématiquement un dispositif conforme à l'invention dans un mode de réalisation particulier permettant à la fois des mesures en réflexion et en transmission du faisceau de mesure.

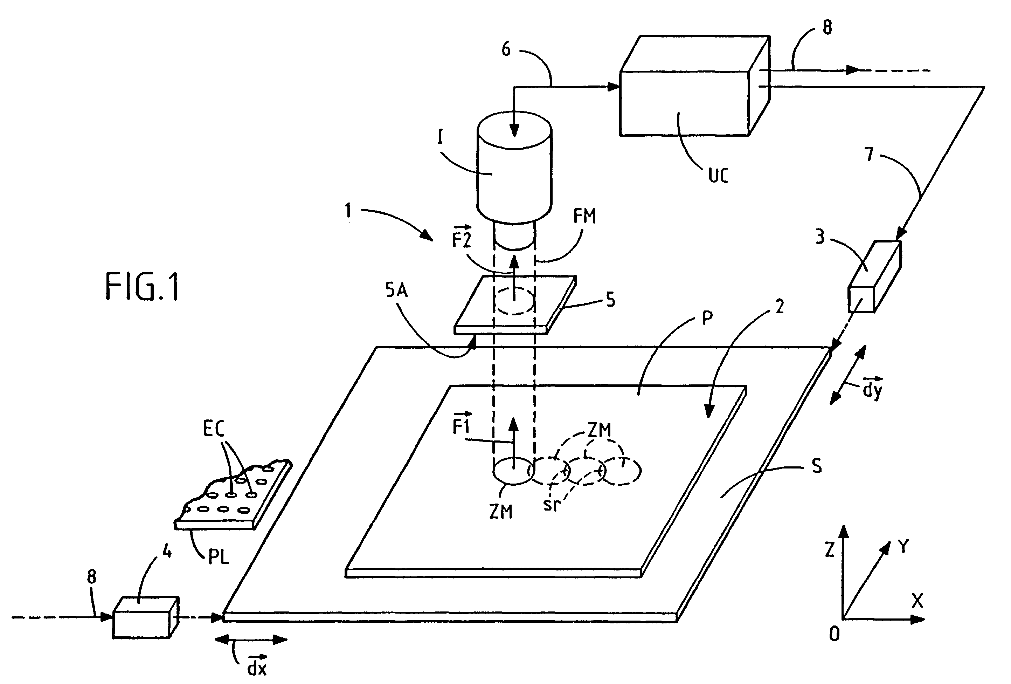

Le dispositif 1 conforme à l'invention et représenté sur la figure 1 est destiné à déterminer la forme de la surface d'onde réfléchie par un pièce P sensiblement plane et réfléchissante.

Plus précisément, ledit dispositif 1 est destiné à mesurer la hauteur "d'aspérités" et/ou de "dépressions" infimes non représentées de la surface dans la direction OZ orthogonale au plan OXY de la pièce P.

A cet effet, ledit dispositif 1 comporte, de façon connue :

- un support mobile S de forme générale plane, portant ladite pièce P et susceptible d'être déplacé dans le plan OXY par des moyens de déplacement 3 et 4, tel que précisé ci-dessous ;
- un interféromètre I, de type usuel, fixé à un support non représenté en regard d'une surface 2 de la pièce P, susceptible d'émettre un faisceau lumineux de mesure FM sur une zone de mesure ZM de ladite surface 2, et de mesurer les franges d'interférence créées par les réflexions dudit faisceau de mesure FM, respectivement sur la surface 2, tel qu'illustré par une flèche $\vec{F1}$, et sur la face 5A d'une lame de référence transparente 5 agencée sensiblement parallèlement à la surface 2 sur le trajet du faisceau de mesure FM, tel qu'illustré par une flèche $\vec{F2}$. Les franges d'interférence ainsi créées sont représentatives de la distance entre la face de réflexion 5A de la lame de référence 5 et la zone de mesure ZM correspondante de la surface 2 ;

- lesdits moyens de déplacement 3 et 4, réalisés par exemple sous forme de vis et de moteur ou de courroie et de poulie crantée, susceptibles de déplacer le support S respectivement selon la direction OX, tel qu'illustré par une double flèche $\vec{dx}$, et selon la direction OY, tel qu'illustré par une double flèche $\vec{dy}$. Le déplacement du support S permet alors de réaliser au moyen de l'interféromètre I des mesures sur une pluralité de zones de mesure ZM (dont on a uniquement représenté quelques-unes sur la figure 1) recouvrant complètement ladite surface 2, chacune desdites zones de mesure ZM étant au moins partiellement recouverte sur un secteur de recouvrement sr par une zone de mesure adjacente. Les mesures réalisées sur lesdits secteurs de recouvrement sr permettent d'adapter entre elles les mesures réalisées sur les zones de mesure adjacentes correspondantes ; et
- une unité de commande UC commandant ledit interféromètre I, comme illustré par une liaison 6, et lesdits moyens de déplacement 3 et 4, comme illustré respectivement par des liaisons 7 et 8, et déterminant à partir des mesures effectuées par l'interféromètre I sur toutes lesdites zones de mesure ZM (et donc également sur les secteurs de recouvrement sr) la forme de la surface d'onde réfléchie par la pièce P.

Dans le cadre de l'invention, les moyens de déplacement peuvent également être réalisés de manière :

- à déplacer le faisceau de mesure par rapport au support fixe, soit par un déplacement direct de l'interféromètre, soit par une déviation du faisceau de mesure, par exemple au moyen d'un jeu de miroirs mobiles ; ou
- à déplacer le support dans une première direction du plan OXY et l'interféromètre dans une seconde direction dudit plan OXY, orthogonale à ladite première direction.

On sait que pour obtenir des mesures précises, il est nécessaire d'avoir un parallélisme très bon entre la face 5A de la lame de référence 5 et la surface 2 de la pièce P. Or, notamment en raison de l'existence de flexions et/ou de jeux au niveau du support S, ainsi qu'au niveau de la fixation non représentée de la pièce P sur le support S, cette exigence n'est pas satisfaisante surtout pour des supports de dimensions importantes.

Pour remédier à cet inconvénient, une solution (peu satisfaisante) consiste à régler manuellement avant la mesure de chaque zone de mesure ZM ledit parallélisme, ce qui entraîne une mise en oeuvre lourde et longue (durée de réglage, durée de thermalisation).

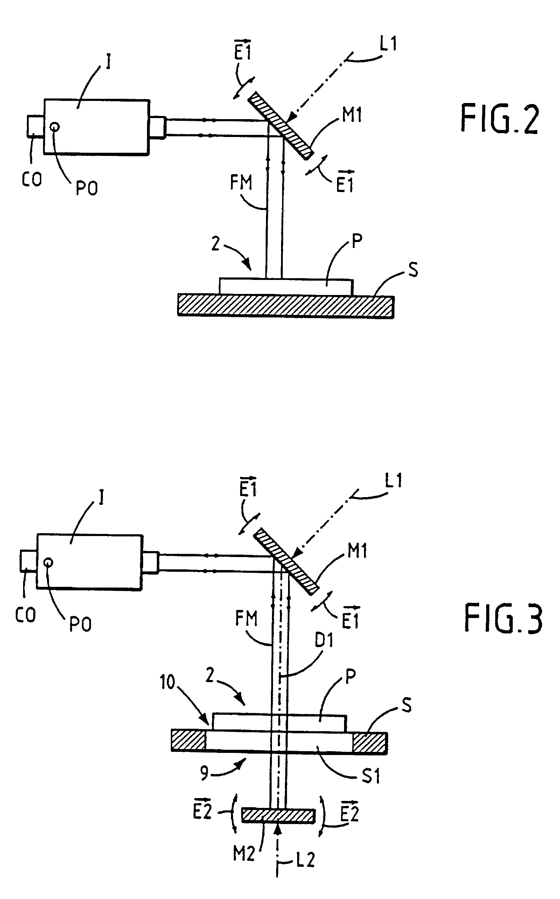

Le dispositif 1 conforme à l'invention est destiné à remédier à ces inconvénients. A cet effet, il comporte selon l'invention, tel que représenté sur la figure 2, en plus des éléments précités :

- un miroir M1 orientable, comme indiqué par des flèches $\overrightarrow{E1}$, et agencé sur le trajet du faisceau de mesure FM entre l'interféromètre I disposé de façon appropriée et la pièce P, de manière à adresser, par réflexion, ledit faisceau de mesure FM orthogonalement sur la surface 2 de ladite pièce P ; et
- un capteur optique CO intégré dans l'interféromètre I et susceptible de déterminer la position de l'image d'un point lumineux PO représenté schématiquement du faisceau de mesure FM, réfléchi par la surface 2 de la pièce P, ledit point lumineux PO étant situé à une position de référence prédéfinie, et l'orientation dudit miroir M1 étant commandée de manière à ramener automatiquement la position de l'image du point lumineux PO, déterminée par le capteur optique CO, à ladite position de référence.

Ledit miroir M1 est commandé, de façon automatique et en temps utile, comme indiqué par une liaison L1, à l'aide d'un moyen de commande, de préférence l'unité de commande UC, qui détermine en temps réel les ordres de commande dudit miroir M1, à partir des mesures réalisées par ledit capteur optique CO qui peut être une caméra de type CCD.

Ainsi, grâce à la commande automatique et continue dudit miroir M1, on règle en temps utile de façon précise le parallélisme nécessaire à la mesure d'une pièce P.

Dans le mode de réalisation représenté sur la figure 2, le dispositif 1 conforme à l'invention permet uniquement de réaliser des mesures par réflexion du faisceau de mesure FM sur la pièce P.

Sur la figure 3, on a représenté schématiquement un autre mode de réalisation permettant, en plus des mesures par réflexion, également des mesures par transmission du faisceau de mesure FM à travers une pièce P transparente (pour ledit faisceau de mesure FM).

Dans ce cas, le dispositif conforme à l'invention présente les caractéristiques suivantes :

- le support S est réalisé, sur une partie S1 correspondant au moins à la partie portant la pièce P, de manière à laisser passer le faisceau lumineux de mesure FM, émis par l'interféromètre I et transmis par ladite pièce P qui est transparente ; et
- ledit dispositif comporte de plus un miroir M2 orientable, comme indiqué par des flèches $\overrightarrow{E2}$, agencé en regard de la face 9 du support S opposée à celle 10 portant la pièce P et disposé sur le trajet du faisceau de mesure FM émis par l'interféromètre I et transmis selon une direction de transmission D1 par la pièce P et le support S, ledit miroir M2 étant agencé approximativement orthogonalement audit faisceau de mesure FM transmis et étant orienté de manière à renvoyer ledit faisceau FM dans ladite direction de transmission D1.

Ainsi, grâce au renvoi du faisceau lumineux FM vers l'interféromètre I par le miroir M2, on peut réaliser les mesures interférométriques nécessaires à la mise en oeuvre de l'invention.

De plus, par l'orientation précise dudit miroir M2, on évite tout problème de défaut de parallélisme dans le dispositif 1, puisque les mouvements de la pièce P n'affectent pas la direction de propagation du faisceau lumineux qui la traverse.

Le miroir M2, dont l'orientation est commandée par une liaison L2 reliée par exemple à l'unité de commande UC (non représentée sur les figures 2 et 3), est de préférence motorisé, mais non automatisé, afin de pouvoir régler la collimation à distance, avant les mesures, sans pour autant perturber l'équilibre thermique du dispositif 1.

Par conséquent, le dispositif de la figure 3 peut réaliser :

- soit des mesures en transmission, pour lesquelles le miroir M2 sert à ajuster la collimation et le miroir M1 à adresser le faisceau de mesure FM sur la pièce P ;
- soit des mesures en réflexion, pour lesquelles le miroir M1 réalise la collimation et le miroir M2 est inutilisé.

Le dispositif 1 conforme à l'invention comporte de plus une plaquette PL amovible, représentée partiellement sur la figure 1, de dimensions au moins égales aux courses du support S. Cette plaquette PL qui est susceptible d'être montée sur le support S est munie d'une pluralité d'éléments caractéristiques EC, dont les positions effectives sont connues et sont susceptibles d'être mesurées par l'interféromètre. Dans l'exemple représenté, lesdits éléments caractéristiques EC sont des trous, par exemple de diamètre 5 mm, qui sont écartés les uns des autres de 20 à 50 mm dans le plan de la plaquette PL. Les comparaisons respectivement entre les positions mesurées par l'interféromètre I et les positions effectives connues de ces éléments caractéristiques EC permettent de déterminer la position relative exacte entre le support S et le faisceau de mesure FM émis sur la pièce P.

**Revendications**

1. Dispositif pour déterminer la forme de la surface d'onde réfléchie par une pièce sensiblement plane (P), ledit dispositif (1) comportant :

   - un support (S) portant ladite pièce (P) ;

- un interféromètre (I) agencé en regard de la surface de réflexion (2) de la pièce (P), susceptible d'émettre un faisceau lumineux de mesure (FM) sur une zone de mesure (ZM) de ladite surface (2) et de mesurer les franges d'interférence créées par les réflexions dudit faisceau de mesure (FM), respectivement sur ladite surface (2) et sur une lame de référence (5) agencée sensiblement parallèlement à ladite surface (2) sur le trajet dudit faisceau de mesure (FM) ;
- des moyens de déplacement (3, 4) permettant d'engendrer par leur action le balayage dudit faisceau de mesure (FM) sur la surface (2) de la pièce de manière à permettre audit interféromètre (I) de réaliser des mesures sur une pluralité de zones de mesure (ZM) recouvrant complètement ladite surface (2), chacune desdites zones de mesure (ZM) étant au moins partiellement recouverte sur un secteur de recouvrement (sr) par une zone de mesure adjacente ; et
- une unité de commande (UC) commandant ledit interféromètre (I) et lesdits moyens de déplacement (3, 4) et déterminant, à partir des mesures effectuées par ledit interféromètre (I) sur toutes les zones de mesure (ZM), la forme de ladite surface d'onde réfléchie par la pièce (P), les mesures effectuées sur les secteurs de recouvrement (sr) étant utilisées pour adapter entre elles les mesures réalisées sur les zones de mesure (ZM) adjacentes correspondantes,

caractérisé en ce qu'il comporte de plus :

- un premier miroir (M1) orientable et agencé sur le trajet du faisceau de mesure (FM) entre l'interféromètre (I) et la pièce (P) de manière à adresser, par réflexion, ledit faisceau de mesure (FM) orthogonalement sur la surface (2) de ladite pièce (P) ; et
- un capteur optique (CO) susceptible de déterminer la position de l'image d'un point lumineux (PO) du faisceau de mesure (FM), réfléchi par la surface (2) de la pièce (P), ledit point lumineux (PO) étant situé à une position de référence prédéfinie, et l'orientation dudit premier miroir (M1) étant commandée de manière à ramener automatiquement la position de l'image du point lumineux (PO), déterminée par le capteur optique (CO), à ladite position de référence.

2. Dispositif selon la revendication 1,
caractérisé en ce que l'orientation dudit premier miroir (M1) est commandée par l'unité de commande (UC) recevant les mesures effectuées par ledit capteur optique (CO).

3. Dispositif selon l'une des revendications 1 ou 2, caractérisé en ce que ledit capteur optique (CO) est intégré dans l'interféromètre (I).

4. Dispositif selon l'une quelconque des revendications 1 à 3,
caractérisé en ce qu'avant chaque mesure d'une zone de mesure (ZM), on affine l'orientation dudit premier miroir (M1) à partir du traitement de franges d'interférence mesurées par l'interféromètre (I).

5. Dispositif selon l'une quelconque des revendications 1 à 4, susceptible de déterminer la forme de la surface d'onde transmise par une pièce (P) à faces sensiblement parallèles, transparente pour le faisceau lumineux de mesure (FM),
caractérisé en ce que ledit support (S) est réalisé, au moins sur la partie portant ladite pièce (P), de manière à laisser passer le faisceau lumineux de mesure (FM) émis par l'interféromètre (I) et transmis par ladite pièce (P) qui est transparente, et en ce que ledit dispositif (1) comporte de plus un second miroir orientable (M2), qui est agencé du côté opposé à l'interféromètre (I) par rapport au support (S) et à la pièce (P) et qui est disposé sur le trajet du faisceau de mesure (FM) émis par l'interféromètre (I) et transmis selon une direction de transmission (D1) par la pièce (P) et le support (S), ledit second miroir (M2) étant agencé approximativement orthogonalement audit faisceau de mesure (FM) transmis et étant orienté de manière à renvoyer ledit faisceau de mesure (FM) dans ladite direction de transmission (D1).

6. Dispositif selon la revendication 5,
caractérisé en ce que l'orientation dudit second miroir (M2) est commandée par ladite unité de commande (UC).

7. Dispositif selon l'une quelconque des revendications précédentes,
caractérisé en ce qu'il comporte une plaquette (PL), amovible, de dimensions au moins égales aux courses du support (S), montée sur le support (S) et munie d'une pluralité d'éléments caractéristiques (EC), dont les positions effectives sont connues et sont susceptibles d'être mesurées par l'interféromètre (I), les comparaisons respectivement entre les positions mesurées par l'interféromètre (I) et les positions effectives connues de ces éléments caractéristiques (EC) permettant de déterminer la position relative entre le support (S) et le faisceau de mesure (FM) émis sur la pièce (P).

8. Dispositif selon la revendication 7,
caractérisé en ce que lesdits éléments caractéristiques (EC) sont des trous pratiqués dans la plaquette (PL).

**Patentansprüche**

1. Vorrichtung zum Ermitteln der Form der von einem im Wesentlichen ebenen Teil (P) reflektierten Wellenfront, wobei die Vorrichtung (1) aufweist:

   - einen Träger (S), der das Teil (P) trägt;
   - ein gegenüber der Reflexionsfläche (2) des Teils (P) angeordnetes Interferometer (I), das fähig ist, ein Messlichtstrahlungsbündel (FM) auf eine Messzone (ZM) der Oberfläche (2) abzustrahlen und die Interferenzmuster zu messen, die durch die Reflexionen des Messstrahlungsbündels (FM) an der Oberfläche (2) bzw. an einem Bezugsplättchen (5) erzeugt werden, das im Wesentlichen parallel zu der Oberfläche (2) auf dem Weg des Messstrahlungsbündels (FM) angeordnet ist;
   - Verschiebungsmittel (3, 4), die durch ihre Tätigkeit gestatten, das Abtasten des Messstrahlungsbündels (FM) an der Oberfläche (2) des Teils zu bewirken, um dem Interferometer (I) zu gestatten, Messungen an einer Vielzahl von Messzonen (ZM) durchzuführen, die die Oberfläche (2) vollständig abdecken, wobei jede der Messzonen (ZM) von einer benachbarten Messzone wenigstens teilweise in einem Überlappungsbereich (sr) überlappt wird; und
   - eine Steuerungseinheit (UC), die das Interferometer (I) und die Verschiebungsmittel (3, 4) steuert und ausgehend von Messungen, die vom Interferometer (I) an allen Messzonen (ZM) durchgeführt werden, die Form der vom Teil (P) reflektierten Wellenfront ermittelt, wobei die an den Überlappungsbereichen (sr) durchgeführten Messungen dazu verwendet werden, die an den entsprechenden benachbarten Messzonen (ZM) durchgeführten Messungen untereinander anzupassen,

   dadurch gekennzeichnet, dass sie außerdem aufweist:

   - einen ersten Spiegel (M1), der einstellbar und auf dem Weg des Messstrahlungsbündels (FM) zwischen dem Interferometer (I) und dem Teil (P) so angeordnet ist, dass er durch Reflexion das Messstrahlungsbündel (FM) rechtwinklig auf die Oberfläche (2) des Teils (P) richtet; und
   - einen optischen Sensor (CO), der die Position der Abbildung eines Lichtpunktes (PO) des Messstrahlungsbündels (FM) ermitteln kann, das von der Oberfläche (2) des Teils (P) reflektiert wird, wobei sich der Lichtpunkt (PO) in einer vorher definierten Bezugsposition befindet und die Einstellung des Spiegels (M1) so gesteuert wird, dass er die vom optischen Sensor (CO) ermittelte Position der Abbildung des Lichtpunktes (PO) in die Bezugsposition zurückbringt.

2. Vorrichtung nach Anspruch 1, dadurch gekennzeichnet, dass die Einstellung des ersten Spiegels (M1) von der Steuerungseinheit (UC) gesteuert wird, die die vom optischen Sensor (CO) durchgeführten Messungen empfängt.

3. Vorrichtung nach einem der Ansprüche 1 oder 2, dadurch gekennzeichnet, dass der optische Sensor (CO) in das Interferometer (I) integriert ist.

4. Vorrichtung nach einem der Ansprüche 1 bis 3, dadurch gekennzeichnet, dass vor jeder Messung einer Messzone (ZM) die Einstellung des ersten Spiegels (M1), ausgehend von der Verarbeitung des mit dem Interferometer (I) gemessenen Interferenzmusters, verfeinert wird.

5. Vorrichtung nach einem der Ansprüche 1 bis 4, die die Form der Wellenfront ermitteln kann, die von einem für das Messlichtstrahlungsbündel (FM) transparenten Teil (P) mit im Wesentlichen parallelen Flächen transmittiert wird, dadurch gekennzeichnet, dass der Träger (S) wenigstens in dem Abschnitt, der das Teil (P) trägt, so ausgeführt ist, dass er das Messlichtstrahlungsbündel (FM) durchgehen lässt, das vom Interferometer (I) abgestrahlt und vom Teil (P), das transparent ist, transmittiert wird, und dass die Vorrichtung (1) außerdem einen zweiten, einstellbaren Spiegel (M2) aufweist, der auf der in Bezug auf den Träger (S) und das Teil (P) dem Interferometer (I) entgegengesetzten Seite und auf dem Weg des Messstrahlungsbündels (FM) angeordnet ist, das vom Interferometer (I) abgestrahlt und entsprechend einer Transmissionsrichtung (D1) von dem Teil (P) und dem Träger (S) transmittiert wird, wobei der zweite Spiegel (M2) zum transmittierten Messstrahlungsbündel (FM) annähernd rechtwinklig angeordnet ist und so eingestellt wird, dass er das Messstrahlungsbündel (FM) in der Transmissionsrichtung (D) zurückstrahlt.

6. Vorrichtung nach Anspruch 5, dadurch gekennzeichnet, dass das Einstellen des zweiten Spiegels (M2) von der Steuerungseinheit (UC) gesteuert wird.

7. Vorrichtung nach einem der vorhergehenden Ansprüche, dadurch gekennzeichnet, dass sie ein abnehmbares Plättchen (PL) mit Abmessungen aufweist, die wenigstens gleich den Verschiebewegen des Trägers (S) sind, das am Träger (S) angebracht und mit einer Vielzahl von charakteristischen Elementen (EC) versehen ist, deren tatsächliche Positionen bekannt sind und mit dem Interferometer (I) gemessen werden können, wobei die jeweiligen Vergleiche zwischen den mit dem Interferometer (I) gemessenen Positionen und den bekannten, tatsächlichen Positionen dieser charakteristischen Elemente (EC) gestatten, die relative Position zwischen dem Träger (S) und dem auf das Teil (P) abgestrahlten Messstrahlungsbündel (FM) zu ermitteln.

8. Vorrichtung nach Anspruch 7,
dadurch gekennzeichnet, dass die charakteristischen Elemente (EC) Löcher sind, die in das Plättchen (PL) gebohrt wurden.

**Claims**

1. Device for determining the shape of the wave surface reflected by a substantially plane component (P), the said device (1) including:

    - a support (S) bearing the said component (P)
    - an interferometer (I) arranged opposite the surface of reflection (2) of the component (P), capable of emitting a measurement light beam (FM) onto a measurement area (ZM) of the said surface (2) and of measuring the interference fringes created by the reflections of the said measurement beam (FM), respectively off the said surface (2) and off a reference plate (5) arranged so as to be substantially parallel to the said surface (2) over the path of the said measurement beam (FM);
    - movement means (3, 4) enabling, by their action, the said measurement beam (FM) to be scanned over the surface (2) of the component so as to enable the said interferometer (I) to take measurements on a number of measurement areas (ZM) completely covering the said surface (2), each of the said measurement areas (ZM) being at least partially overlapped, over an overlap sector (sr), by an adjacent measurement area; and
    - a control unit (UC) which controls the said interferometer (I) and the said movement means (3, 4) and determines, from the measurements taken by the said interferometer (I) on all the measurement areas (ZM), the shape of the said wave surface reflected by the component (P), the measurements taken on the overlap sectors (sr) being used to fit together the measurements taken on the corresponding adjacent measurement areas (ZM),

    characterized in that it additionally includes:

    - a first swivelling mirror (M1) arranged in the path of the measurement beam (FM) between the interferometer (I) and the component (P) in such a way as to direct the said measurement beam (FM) orthogonally, by reflection, onto the surface (2) of the said component (P); and
    - an optical sensor (CO) capable of determining the position of the image of a light point (PO) of the measurement beam (FM), reflected by the surface (2) of the component (P), the said light point (PO) being located at a predefined reference position and the orientation of the said first mirror (M1) being controlled in such a way as to bring the position of the image of the light point (PO), determined by the optical sensor (CO), back to the said reference position automatically.

2. Device according to Claim 1,
characterized in that the orientation of the said first mirror (M1) is controlled by the control unit (UC) which receives the measurements taken by the said optical sensor (CO).

3. Device according to either of Claims 1 and 2,
characterized in that the said optical sensor (CO) is integrated into the interferometer (I).

4. Device according to any one of Claims 1 to 3,
characterized in that before each measurement of a measurement area (ZM), the orientation of the said first mirror (M1) is refined on the basis of the processing of interference fringes measured by the interferometer (I).

5. Device according to any one of Claims 1 to 4,
capable of determining the shape of the wave surface transmitted by a substantially parallel-faced transparent component (P) for the measurement light beam (FM), characterized in that the said support (S) is made, at least on the part bearing the said component (P), in such a way as to let the measurement light beam (FM) emitted by the interferometer (I) and transmitted by the said transparent component (P) pass through it, and in that the said device (1) additionally includes a second swivelling mirror (M2) which is arranged on the side opposite the interferometer (I) with respect to the support (S) and to the component (P) and which is placed in the path of the measurement beam (FM) emitted by the interferometer (I) and transmitted along a transmission direction (D1) by the component (P) and the support (S), the said second mirror (M2) being arranged approximately orthogonally to the said transmitted measurement beam (FM) and being oriented in such a way as to send the said measurement beam (FM) back in the said transmission direction (D1).

**6.** Device according to Claim 5,
characterized in that the orientation of the said second mirror (M2) is controlled by the said control unit (UC).

**7.** Device according to any one of the preceding claims,
characterized in that it includes a removable plate (PL), having dimensions at least equal to the amounts of travel of the support (S), mounted on the support (S) and provided with a number of characteristic elements (EC), the effective positions of which are known and are capable of being measured by the interferometer (I), the comparisons respectively between the positions measured by the interferometer (I) and the known effective positions of these characteristic elements (EC) making it possible to determine the relative position between the support (S) and the measurement beam (FM) emitted onto the component (P).

**8.** Device according to Claim 7,
characterized in that the said characteristic elements (EC) are holes made in the removable plate (PL).

FIG.1

FIG.2

FIG.3